# EUROPÄISCHE PATENTSCHRIFT

(11) **EP 2 937 155 B1**
(45) Veröffentlichungstag und Bekanntmachung des Hinweises auf die Patenterteilung: **07.04.2021**
(21) Anmeldenummer: 15162656.1
(22) Anmeldetag: 07.04.2015
(51) Int. Cl.: B21C 51/00, B21H 1/06, B21J 9/20, G01B 11/245, G01B 11/25

(54) **RINGWALZMASCHINE UND VERFAHREN ZUR STEUERUNG EINER RINGWALZMASCHINE**
RING ROLLING MACHINE AND METHOD FOR CONTROLLING A RING ROLLING MACHINE
MACHINE À LAMINER DES BAGUES ET PROCÉDÉ DE COMMANDE D'UNE MACHINE À LAMINER DES BAGUES

(30) Priorität: 11.04.2014 DE 102014005333
(43) Veröffentlichungstag der Anmeldung: 28.10.2015
(73) Patentinhaber: SMS group GmbH, 40237 Düsseldorf (DE)
(72) Erfinder: Bolik, Ralf, 46240 Bottrop (DE)
(74) Vertreter: Reuther, Martin

(56) Entgegenhaltungen:
- EP-A1- 1 245 302
- WO-A2-2013/041083
- DE-A1- 4 312 565
- DE-A1- 10 231 430
- "TBK MESSANLAGEN Berührungslose Vermessung für optimale Produktionsprozesse", TBK Automatisierung und Messtechnik , März 2014 (2014-03), XP002744359, Gefunden im Internet: URL:http://meer.sms-group.com/fileadmin/us er_upload/pdf/publicationgroup/langprodukt e/profil/TBK_DE_03-14.pdf [gefunden am 2015-09-11]

## Beschreibung

Die Erfindung betrifft eine Ringwalzmaschine und ein Verfahren zur Steuerung einer Ringwalzmaschine.

Umformmaschinen sind in vielfacher Hinsicht, beispielsweise als Schmieden, Walzmaschinen, Ringwalzmaschinen, Strangpressen, hinlänglich aus dem Stand der Technik bekannt. In der Regel werden bei Umformprozessen in derartigen Umformmaschinen Vormaterialien, wie beispielsweise insbesondere urgeformte Vormaterialien, in Halbzeuge oder Halbzeuge zu Werkstücken umgeformt, wobei die hierfür notwendigen Kräfte und Drücke über entsprechende Umformwerkzeuge auf die jeweils umgeformten Werkstücke, seien dieses urgeformte Vormaterialien oder seien dieses Halbzeuge oder sonstige Werkstücke, aufgebracht werden.

Insbesondere sind Ringwalzmaschinen und Steuerverfahren derartiger Maschinen hinlänglich aus dem Stand der Technik, beispielsweise aus der DE 25 04 969 A1 oder auch aus der DE 39 23 275 C2, bekannt. Hierbei umfassen die Ringwalzmaschinen regelmäßig einen Radialantrieb, der mit einer Walzenwelle einer in radialer Richtung wirkenden Radialwalze wirkverbunden ist, und zumindest einen Axialantrieb, der mit einer Walzenwelle einer in Axialrichtung wirkenden Axialwalze wirkverbunden ist. Hierbei dienen, wie beispielsweise in der DE 25 04 969 A1 dargestellt, die Axialrollen in der Regel dazu, ein zu walzendes Werkstück axial, also in einer Richtung parallel zur Rotationsachse bzw. Symmetrieachse des ringförmigen Werkstückes, umzuformen, während gleichzeitig oder hintereinander hierzu über die Radialwalze der Ring radial zur Rotationsachse bzw. Symmetrieachse des Werkstücks bzw. zu dessen Hochachse umgeformt wird. Häufig wirkt mit der Radialwalze noch ein Walzdorn zusammen.

Hierbei versteht es sich, dass die Walzen mit Ihren zugehörigen Walzenwellen in der Regel rotatorisch über entsprechende Radialantriebe bzw. Axialantriebe in Bewegung oder angesteuert gesetzt werden. Darüber hinaus umfassen derartige Umformmaschinen auch Linearachsen, die in der Regel hydraulisch geregelt sind und die beispielsweise dem Anstellen dieser Rollen zueinander dienen. Ebenso können über entsprechende Linearachsen auch andere Baugruppen, wie beispielsweise eine Einlaufführung, der Walzdorn oder sonstiges, entsprechend hydraulisch geregelt angesteuert werden.

So ist es beispielsweise bei Ringwalzmaschinen bekannt, den Umformfortschritt durch mechanische Tastrollen oder Lasertriangulation mit einem Laserpunkt zu überwachen und ggf. auch steuernd oder regelnd in den Walzprozess einzugreifen. Bei sehr hohen Ringen bzw. Hülsen werden manchmal bis zu drei Laserpunkte für Triangulationsmessungen eingesetzt. Entsprechend der DE 39 23 275 C2 kann der Umformschritt auch über eine Schattenabbildung durch eine Schlierenblende überwacht werden, was jedoch ebenfalls konstruktiv sehr aufwändig ist.

Es ist Aufgabe vorliegender Erfindung, eine Ringwalzmaschine und ein Verfahren zur Steuerung einer Ringwalzmaschine bereitzustellen, die bei einfachem maschinebaulichem Aufbau dennoch präzise arbeiten.

Die Aufgabe der Erfindung wird durch eine Ringwalzmaschine und ein Verfahren zur Steuerung einer Ringwalzmaschine mit den Merkmalen der unabhängigen Ansprüche gelöst. Weitere vorteilhafte Ausgestaltungen finden sich in den Unteransprüchen sowie der nachfolgenden Beschreibung.

Hierbei geht die Erfindung von der Grunderkenntnis aus, dass durch die konstante Laserlinie, welche ein Lichtschnittsensor für seine Messungen nutzt, ein Profil während des Umformens - und zwar so lange sich das Werkstück im Arbeitsbereich der Umformmaschine befindet - derart genau verfolgt werden kann, dass die Wirkung der auf das Werkstück aufgebrachten Umformkräfte im Detail einer Überwachung unterzogen werden können. Je nach konkreter Ausgestaltung ermöglicht die konstante Laserlinie eines Lichtschnittsensors mit einer entsprechenden Kamera die gleichzeitige Messung und Auswertung von über 500 bzw. von über 1000 oder sogar von über 3000 Messpunkten. Hierbei liegt in der Regel bei derartigen Lichtschnittsensoren, die ggf. auch Lichtschnitt-Profilsensoren oder Lichtschnitt-Triangulationssensoren genannt sind, ein Abbildungssystem ähnlich zur Lasertriangulation mit Punktlasern vor, jedoch mit einer Linienoptik und einem Flächensensor, wobei das Laserlicht mittels einer Linienoptik, z.B. einer Zylinderlinse, zu einer Linie geformt und auf das Messobjekt projiziert und das remittierte Licht über einen Abbildungsoptik auf dem Flächensensor abgebildet sowie anschließend noch das abgebildete Laserbild geometrisch entzerrt und ausgewertet wird. Hierdurch können insbesondere Wölbungen oder sonstige Verwerfungen, welche beim Walzen von Ringen auftreten können, präzise erkannt werden. Ebenso versteht es sich, dass bei anderen Umformprozessen lokale oder auch nur kurzzeitig auftretende Profilveränderungen exakt ermittelt und überwacht werden können. Ebenso ermöglicht die hohe Zahl der aufgenommenen Bildpunkte eine Fehleranalyse der jeweiligen Messwerte und Messergebnisse.

Zwar ist die Verwendung von Lichtschnittsensoren bei Umformmaschinen prinzipiell schon aus der DE 10 2010 046 737 A1 oder auch aus der DE 101 2011 000 304 A1 bekannt. Jedoch erfolgen hier die Messungen entweder vor oder nach dem Umformen, so dass zielgerichtete Eingriffe während des Umformens, die insbesondere die Reaktion des individuellen Werkstücks auf den jeweiligen Umformvorgang berücksichtigen, nicht erfolgen können.

So kann bei einfachem maschinenbaulichem Aufbau eine Ringwalzmaschine, die wenigstens ein Umformwerkzeug umfasst, welches auf ein in einem Arbeitsbereich der Ringwalzmaschine angeordnetes Werkstück umformend einwirkt, dennoch präzise arbeiten, wenn die Ringwalzmaschine einen Lichtschnittsensor umfasst, der auf das in dem Arbeitsbereich der Ringwalzmaschine angeordnete Werkstück gerichtet ist und eine Eingangsgröße für eine Umformsteuerungseinrichtung darstellt, welche während des Umformens das wenigstens eine Umformwerkzeug in Bezug auf das Werkstück anstellt.

Ebenso kann dann zur Steuerung einer Ringwalzmaschine bei einfachem maschinenbaulichem Aufbau ein präzises Arbeiten gewährleistet werden, wenn das Profil eines in der Ringwalzmaschine umgeformten Werkstücks mittels eines Lichtschnittsensors überwacht wird.

Es versteht sich, dass die Vorteile einer konstanten Laserlinie, welche durch einen Lichtschnittsensor bereitgestellt wird, auch bei Einsatz mehrerer Lichtschnittsensoren, insbesondere wenn diese beispielsweise überkreuzend bzw. sonstwie linear unabhängig angeordnet sind, entsprechend vorteilhaft sein können. Ebenso ist es denkbar, statt einer durchgehenden Laserlinie auch einen entsprechend aufgefächerten Laserstrahl, der ein Laserfeld abdeckt, zu nutzen.

Eine entsprechende Überwachung des Profils kann dann zur Ansteuerung der Ringwalzmaschine genutzt werden, wobei dieses eine hervorragend präzise Arbeit der entsprechenden Ringwalzmaschine bei einfachem maschinenbaulichem Aufwand ermöglicht.

Im vorliegenden Zusammenhang beschreibt der Begriff "Arbeitsbereich" den Bereich, den ein Werkstück einnimmt, während es in der Ringwalzmaschine

Vorzugsweise ist der Lichtschnittsensor auf einen Umformbereich, in welchem das Umformwerkzeug umformend wirksam ist, gerichtet. Ein Umformwerkzeug drückt nicht zwingend nur in dem Bereich auf ein Werkstück, mit dem es in Kontakt befindlich ist. Vielmehr erreichen die durch die Umformkräfte aufgebrachten Spannungen in dem Werkstück tief in das Werkstück hinein und häufig auch weit bis in Bereiche, in denen das Werkstück nicht in Kontakt mit dem Umformwerkzeug ist. Im vorliegenden Zusammenhang wird der gesamte Umformbereich, in welchem ein Umformwerkzeug noch in dem Werkstück wirksam ist, als Umformbereich bezeichnet. Ist nunmehr der Lichtschnittsensor auf diesem Umformbereich bzw. auf Oberflächen des Werkstücks, die in dem Umformbereich befindlich sind, gerichtet, so ist es möglich, einen sehr unmittelbaren Einblick in die beim Umformen auftretenden Spannungen und Kräfte bzw. die dort auftretenden Profiländerungen zu gewinnen. Dieses ermöglicht, sehr gezielt und direkt auf den Umformprozess einwirken zu können.

So ist es beispielsweise denkbar, den Lichtschnittsensor unmittelbar auf Bereiche hinter oder vor etwaigen Walzen auszurichten. Ist ein Walzkaliber zwischen Walzen nicht ganz geschlossen, sind insbesondere auch Messungen zwischen diesen Walzen möglich.

Durch seine lineare Überwachungsmöglichkeit kann der Lichtschnittsensor ggf. nicht nur die Oberfläche des Werkstücks in radialer Richtung sondern auch in axialer Richtung, insbesondere bis zu den oberen beziehungsweise unteren Rändern des Werkstücks, also in axialer Richtung, überwachen. Insofern können ggf. auch axiale Profile entsprechend während der Umformung vermessen bzw. überwacht werden. Es versteht sich, dass gegebenenfalls auch noch weitere Lichtschnittsensoren dementsprechend vorgesehen seien können, um die Überwachung zu präzisieren. Ebenso ist es denkbar, einen Lichtschnittsensor auch an anderer Stelle vorzusehen und dementsprechend zur Überwachung zu nutzen.

Es ist von Vorteil, wenn der Lichtschnittsensor auf einen Bereich des Werkstücks der zwischen diesen beiden Umformwerkzeugen liegt, gerichtet ist. Dieses gibt in der Regel ein sehr genaues Bild von dem beim Umformen auftretenden Spannungen und Kräften bzw. Profiländerungen.

Alternativ bzw. kumulativ hierzu kann der Lichtschnittsensor auf wenigstens eine auf das Werkstück gerichtete Umformfläche eines der beiden Umformwerkzeuge gerichtet sein. Dieses ermöglich es, die Relativbewegung des Umformwerkzeugs in Bezug auf das Werkstück während des Umformprozesses zu verfolgen, indem ggf. sowohl die Umformfläche als auch die Oberfläche des Werkstücks in der Nähe der Umformfläche erfasst werden können, um auf diese Weise den Umformvorgang optimieren zu können. So können beispielsweise beim Walzen konischer Ringe die Drehzahl der oberen und unteren Axialwalzen in der Umfanggeschwindigkeit der Hauptwalze angepasst werden. Eine schlechte Anpassung diesbezüglich führt aufgrund der Unterschiede der Kontaktgeschwindigkeit zu verspannt und qualitativ schlechter gewalzten Ringen.

Es versteht sich, dass die vorgenannte Ausgestaltung besonders vorteilhaft für eine präzise Arbeitsweise geeignet ist, wenn der Lichtschnittsensor auf wenigstens eine auf das Werkstück gerichtete Umformfläche beider Umformwerkzeuge gerichtet ist. Ebenso versteht es sich, wenn nicht nur die Umformflächen sondern auch die Bereiche des Werkstücks in der Nähe des Umformflächen und vorzugsweise auch der gesamte Bereich des Werkstücks zwischen diesen beiden Umformwerkzeugen entsprechend durch einen Lichtschnittsensor überwacht wird. In diesem Zusammenhang sei erläutert, dass - je nach konkreter Umsetzung vorliegender Erfindung - auch mehrere Lichtschnittsensoren sich einander ergänzend eingesetzt werden könnten; letzteres hat jedoch den Nachteil, dass dieses einen erheblichen Mehraufwand bedingt, zumal durch die Lichtschnittsensoren an sich der bisher bekannte Messaufbau mit Laserpunkt und Triangulationsmessung einer Vereinfachung unterliegt, die durch den Einsatz mehrerer Lichtschnittsensoren nicht mehr in diesem Maße gegeben ist, wobei sicherlich wegen der Genauigkeit der Messergebnisse hier eine Abwägung getroffen werden muss.

Insofern versteht es sich, dass auch mehrere Lichtschnittsensoren zur Anwendung kommen können, wenn dieses aufgrund der sinnvoll erscheinenden Messgenauigkeit bzw. aufgrund der erweiterten Mess- und Überwachungsmöglichkeiten sinnvoll erscheint. Dementsprechend kann die Ringwalzmaschine wenigstens zwei Lichtschnittsensoren umfassen, die auf das in dem Arbeitsbereich der Umformmaschine angeordnete Werkstück gerichtet sind, bzw. das Profil des in der Ringwalzmaschine umgeformten Werkstücks mittels wenigstens zweier Lichtschnittsensoren überwacht werden.

Insbesondere können die beiden Lichtschnittsensoren überkreuzend oder sonstwie linear unabhängig ausgerichtet sein, so dass unterschiedliche Bereiche des Werkstücks entsprechend erfasst und dann auch überwacht werden können. So ist es beispielsweise möglich, verschiedene Bereiche, so beispielsweise axiale Profile und radiale Profile gleichzeitig zu überwachen, was beispielsweise dadurch realisiert sein kann, dass die beiden Lichtschnittsensoren sowohl radial als auch axial auf das Werkstück ausgerichtet sind. Auch ist es denkbar, verschiedene Fragestellungen in einem einzigen Bereich des Werkstücks mittels zweier sich überkreuzend oder sonstwie linear unabhängig ausgerichteten Lichtschnittsensoren zu überwachen, beispielsweise eine Oberflächengestaltung zwischen zwei Axialwalzen und den dazwischenliegenden Umformbereich mit einem ersten parallel zu einem gewalzten Ring ausgerichteten Lichtschnittsensor und die Krümmung des Rings in diesem Bereich durch einen senkrecht hierzu auf den Ring gerichteten Lichtschnittsensor.

Alternativ hierzu können die beiden Lichtschnittsensoren kollinear ausgerichtet sein. Auch dieses führt zu einer entsprechenden Erweiterung der Mess- und Überwachungsmöglichkeiten. Vorzugsweise ist die Ausrichtung derart, dass die entsprechenden Laserlinien ohne einen Abstand und nur mit einem geringen Überlapp kollinear ausgerichtet sind, so dass hierdurch an sich zunächst eine entsprechend erhöhte Genauigkeit bzw. ein entsprechend erweitertes Messfeld bedingt ist. Es versteht sich, dass der Überlapp an sich das Messfeld erweitert, wobei in dem Überlapp ggf. auch erweiterte Fehlerüberprüfungsmöglichkeiten liegen können, die es rechtfertigen können, den Überlapp ggf. etwas größer zu wählen.

Vorzugsweise wird das Profil während des Umformens gemessen, sodass dann bei einem Vergleich mit einem Sollprofil genaue Aussagen über den Umformvorgang getroffen werden können. Insbesondere wenn auch der Vergleich ebenfalls während des Umformens durchgeführt wird, können unmittelbare Eingriffe bzw. sogar Regelvorgänge zum Regeln der Umformmaschine auf diese Messungen bzw. auf diese Vergleiche gestützt werden. Dementsprechend ist es möglich, aus den Vergleichsergebnissen steuernde Eingriffe in den Umformvorgang der Ringwalzmaschine zu generieren und hierdurch den Walzvorgang an die Vergleichsergebnisse angepasst zu steuern. Insbesondere ist es möglich, regelnde Eingriffe zu generieren bzw. einen Regelkreis zur Steuerung der Ringwalzmaschine unter Ausnutzung dieser Vergleichsergebnisse auszubilden und zu nutzen.

Die Ringwalzmaschine kann zumindest ein paar Axialwalzen als Umformwerkzeuge aufweisen, wobei dann der Lichtschnittsensor von einer ersten Walze eines Walzenpaars zu einer zweiten Walze des Walzenpaars misst. Dieses führt unmittelbar zu einer Messung von einem erstem Umformwegzeug bis zu einem zweiten Umformwerkzeug, wobei entsprechende Messungen sowohl bei den Radialwalzen aber auch bei den Axialwalzen von Vorteil sein können. Auf diese Weise erfolgt eine Messung jeweils unmittelbar im Umformbereich, sodass insbesondere das Profil während des Umformens überwacht werden kann.

Es versteht sich, dass - gegebenenfalls - entsprechende Lichtschnittsensoren kumulativ hierzu an anderer Stelle vorgesehen sein können. So können entsprechende Lichtschnittsensoren auch in unbelasteten Bereichen des Ringes, also beispielsweise zwischen den Radialwalzen und den Axialwalzen in einem bezüglich des Ringes um 90° hinsichtlich der Radialwalzen bzw. der Axialwalzen versetzten Bereichen auf das Werkstück gerichtet sein. Dieses wäre dann eine Profilüberwachung im Arbeitsbereich außerhalb des Umformbereichs, da dort etwaige Walzkräfte, die durch die Walzen aufgebracht sind, nicht mehr in das Gefüge des gewalzten Materials einwirken.

Gerade die Messung von einer Walze bis zu einer anderen Walze, die gegeneinander auf das Werkstück wirken, ermöglicht eine Kontrolle der Walzen bei konischen Ringen, sodass die Kontaktgeschwindigkeiten optimiert werden können, um auf diese Weise Verspannungen bzw. einem qualitativ schlechteren Walzergebnis entgegen zu wirken. Ebenso besteht die Möglichkeit, den aktuellen Profilfüllungsgrad dazustellen und auszuwerten bzw. mit einem Soll-Profil zu vergleichen. Mittels eines Toleranzbandes könnte dann ggf. sogar eine Maschinensteuerung eine qualitative Bewertung der Profilwalzung vornehmen.

In einer Auswertung ist es theoretisch auch möglich, alle gemessenen Lichtschnitte eines Walzvorgangs aneinander zu reihen und hiermit eine Darstellung, insbesondere eine dreidimensionale Darstellung, der gesamten Umformung als zeitliche Abwicklung darzustellen. Auch dieses ermöglicht eine Optimierung des gesamten Walzprozesses. Für genaue Messungen und insbesondere auch für eine Regelung der Ringwalzmaschine ist es Vorteil, dass eine entsprechende Messung in Echtzeit und/oder äquidistant, beispielsweise alle zehn Millisekunden, erfolgt; dann kann ein genaues Bild, das gegebenenfalls auch zu Regelungsprozessen genutzt werden kann, gewonnen werden.

Erfindungsgemäß ist der Lichtschnittsensor an einem Axialwalzgerüst angeordnet und auf das Werkstück gerichtet. Hierdurch kann gewährleistet werden, dass der Lichtschnittsensor das Werkstück insbesondere an seiner Radialseite präzise und einfach erfasst, um seiner Überwachungsfunktion gerecht zu werden.

Der Lichtschnittsensor kann somit gemeinsam mit dem Axialgerüst radial verlagert werden, so dass er auch während des Ringwalzprozesses präzise in Bezug auf das Werkstück ausgerichtet ist.

Durch eine frei wählbare Durchmesserkoordinate in der vertikalen Z-Achse kann der maschinenbauliche Aufbau einer Ringwalzmaschine weiter vereinfacht werden. Dieses ermöglicht einen Verzicht auf eine mechanische Höheverstellung eines oder mehrerer Triangulationslaser, da der Lichtschnittsensor diesbezüglich sehr flexibel eingesetzt werden kann.

Die vorstehend erläuterten Ausgestaltungen sind insbesondere für kleine und mittlere Ringwalzwerke bis 2.000 kN Walzkraft vorteilhaft. Es ist aber auch denkbar, dass diese Ausgestaltung auch für große Ringwalzwerke bis 45.000 kN Walzkraft vorteilhaft sind.

Die entsprechende Verwendung der Lichtschnittsensoren ist insbesondere bei Ringwalzmaschinen die bei Temperaturen über 800 °C, vorzugsweise bei Temperaturen über 850 °C, umformend wirken bzw. bei entsprechenden Umformvorgängen vorteilhaft, da berührungslos und relativ unmittelbar gemessen werden kann, so dass insbesondere auch während des Umformens Messungen erfolgen und ggf. auch entsprechend verwertet werden können. Selbiges gilt auch für den Einsatz der Lichtschnittsensoren bei warmumformenden Ringwalzmaschinen bzw. bei der Warmumformung.

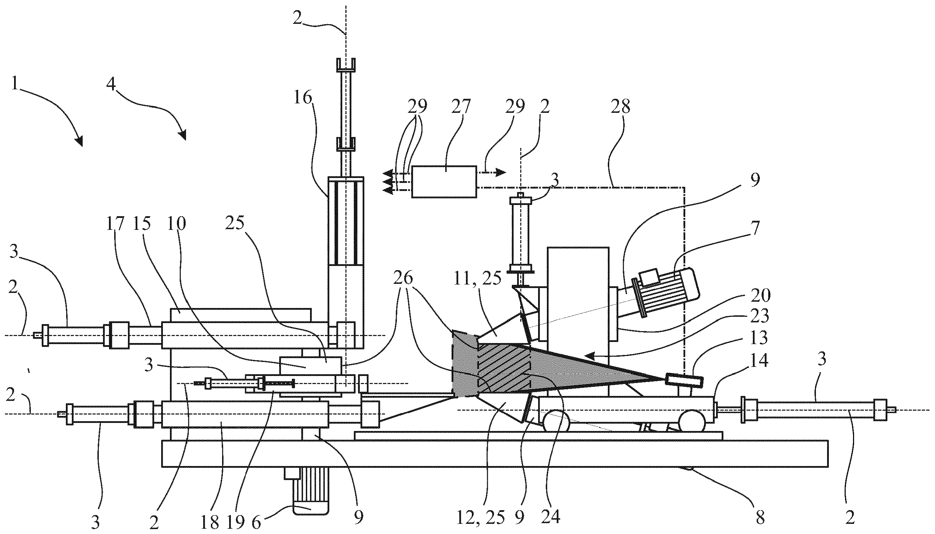

Weitere Vorteile, Ziele und Eigenschaften vorliegender Erfindung werden anhand nachfolgender Beschreibung eines Ausführungsbeispiels erläutert, das insbesondere auch in anliegender Zeichnung dargestellt ist. In der Zeichnung zeigt die einzige Figur eine schematische Seitenansicht einer Ringwalzmaschine.

Die in der Figur dargestellte, als Umformmaschine 1 ausgestaltete Ringwalzmaschine 4 umfasst mehrere hydraulisch geregelte Linearachsen 2, die jeweils über Lineartriebe 3, wie beispielsweise hydraulische Zylinder, angesteuert sind, sowie einen Radialantrieb 6 und Axialantriebe 7, 8, die jeweils über Walzenwellen 9 entsprechende Radialwalzen 10 und Axialwalzen 11, 12 als Umformwerkzeuge 25 antreiben.

In an sich bekannter Weise umfasst die Ringwalzmaschine 4 ein Radialwalzgerüst 15, an dem eine Dornhebevorrichtung 16 über einen oberen Zugrahmen 17 radial verlagerbar ist, wobei die Dornhebevorrichtung 16 ihrerseits den nicht dargestellten Dorn, der letztlich ebenfalls als Umformwerkzeug 25 im Zusammenspiel mit der Radialwalze 10 radial wirkt, axial verlagern kann. Ebenso ist ein unterer Zugrahmen 18 für weitere Baugruppen vorgesehen. Beispielsweise weist die in der Figur dargestellte Ringwalzmaschine 4 auch eine einlaufseitige Zentrierung 19 sowie ein radial verlagerbares Axialwalzgerüst 14 auf, welches die beiden Axialwalzen 11 und 12 und einen axial verlagerbaren Schieber 20 trägt, mittels dessen die obere Axialwalze 11 der beiden Axialwalzen 11, 12 axial angestellt werden kann. All diese Bewegungsmöglichkeiten sind bei diesem Ausführungsbeispiel über hydraulisch geregelte Linearachsen 2 mittels Lineartriebe 3 angesteuert.

Die Walzenwelle 9 des Radialantriebs 6, die mit der Radialwalze 10 verbunden ist, ist bei diesem Ausführungsbeispiel einstückig ausgebildet, wobei sie in einer alternativen Ausführungsform auch mehrstückig aber koaxial angeordnet ausgebildet sein kann.

An dem Axialwalzgerüst 14 ist ein Lichtschnittsensor 13 angeordnet, der auf ein zu walzendes Werkstück bzw. auf einen Arbeitsbereich 23, in welchem das Werkstück angeordnet werden kann und während des Walzens umläuft, gerichtet ist. Bei diesem konkreten Ausführungsbeispiel ist der Lichtschnittsensor 13 auf einen Umformbereich 24 zwischen beiden Axialwalzen 11, 12 gerichtet, in welchem diese Axialwalzen 11, 12 mit ihren Umformflächen 26 umformend auf das Werkstück bzw. auf den zu walzenden Ring wirken.

Durch die Anordnung des Lichtschnittsensors 13 auf dem Axialwalzgerüst 14 kann gewährleistet werden, dass der Lichtschnittsensor 13 jeweils in im Wesentlichen konstanten Abstand bezüglich des Werkstücks und der Axialwalzen 11, 12 verbleibt. Dieses ermöglicht eine besonders einfache Regelung hinsichtlich der Positionierung des Axialwalzgerüsts.

Die in der Zeichnung dargestellte Umformmaschine 1 bzw. Ringwalzmaschine 4 ermöglicht es aufgrund des Lichtschnittlasers bzw. aufgrund des Lichtschnittsensors 13 eine konstante Laserlinie auf die Mantelfläche eines heißen Rings als Werkstück, der in der Regel Temperaturen zwischen 900°C und 1200°C aufweist, zu projizieren und während der Aufwalzung gleichzeitig zu vermessen. Auf diese Weise können verschiedene Profilformen während der Aufwalzung im Detail erfasst werden, was über mechanische Tastrollen oder aber mittels Triangulationslaser, auch wenn hier von möglicherweise bis zu drei Triangulationslaser zur Anwendung kommen, nicht einmal im Ansatz möglich ist.

Insbesondere ist es auch möglich, ein Soll-Profil mit einem aktuellen Ist-Profil zu vergleichen, was einerseits beispielsweise auf einem Monitor geschehen kann, sodass ein Anwender die Möglichkeit hätte, den aktuellen Profilfüllungsgrad zu sehen und zu bewerten. Mittels eines Toleranzbandes könnte auch die Maschinensteuerung eine qualitative Bewertung der Profilwalzung vornehmen. Ebenso ist es denkbar, aufgrund dieser Auswertung den Umformprozess an sich zu beeinflussen, also die Umformmaschine 1 bzw. Ringwalzmaschine 4 anzusteuern bzw. zu regeln.

Vorzugsweise ist der Lichtschnittsensor 13 bzw. - je nach konkreten Erfordernissen - lediglich die Anzeige bzw. das erfasste Kamerafenster des Lichtschnittsensors 13 in der Z-Achse einstellbar. Hierdurch kann die Möglichkeit geschaffen werden, die zu messende Durchmesserkoordinate in der Z-Achse frei wählen zu können, wodurch sich der Maschinenbau stark vereinfacht, da auf eine mechanische Höhenverstellung verzichtet werden kann.

Dadurch, dass die in der Zeichnung beschriebene Anordnung die Kontaktposition der oberen und unteren Axialwalzen 11, 12 mit dem Werkstück gemessen werden kann, kann die Drehzahl der Axialwalzen 11, 12 an die Umfangsgeschwindigkeit der Radialwalze 10 bzw. an die an den Axialwalzen 11, 12 auftretenden Geschwindigkeiten angepasst werden. Dies ist insbesondere bei konischen Ringen von Vorteil, da hierdurch ein besseres Walzergebnis erzielt werden kann. Es versteht sich, dass dieser Vorteil auch bei zylindrischen Ringen dementsprechend genutzt werden kann, obgleich hier letztlich einfachere Verhältnisse zu finden sind.

Die Messergebnisse des Lichtschnittsensors 23 werden einer Umformsteuerungseinrichtung 27 als Eingangsgröße 28 zur Verfügung gestellt, die dann die Lineartriebe 3 und Antriebe 6, 7, 8, die Dornhebevorrichtung 16 und andere Aggregate mittels entsprechender Ausgangsgröße 29 anstellt, was vorzugsweise in Form eines Regelkreises erfolgt. Es versteht sich, dass ggf. auch weitere Eingangsgrößen durch die Umformsteuerungseinrichtung 27 genutzt werden können.

**Bezugszeichenliste:**

| | | | |
|---|---|---|---|
| 1 | Umformmaschine | 15 | Radialwalzgerüst |
| 2 | Linearachse | 16 | Dornhebevorrichtung |
| 3 | Lineartrieb | 17 | oberer Zugrahmen |
| 4 | Ringwalzmaschine | 18 | unterer Zugrahmen |
| 6 | Radialantrieb | 19 | einlaufseitige Zentrierung |
| 7 | Axialantrieb | 20 | Schieber |
| 8 | Axialantrieb | 23 | Arbeitsbereich |
| 9 | Walzenwelle | 24 | Umformbereich |
| 10 | Radialwalze | 25 | Umformwerkzeug |
| 11 | obere Axialwalze | 26 | Umformfläche |
| 12 | untere Axialwalze | 27 | Umformsteuerungseinrichtung |
| 13 | Lichtschnittsensor | 28 | Eingangsgröße |
| 14 | Axialwalzgerüst | 29 | Ausgangsgröße |

## Patentansprüche

1. Ringwalzmaschine (4), umfassend wenigstens ein Umformwerkzeug (25), welches auf ein in einem Arbeitsbereich (23) der Ringwalzmaschine (4) angeordnetes Werkstück umformend einwirken kann, **dadurch gekennzeichnet, dass** die Ringwalzmaschine (4) einen Lichtschnittsensor (13) umfasst, der auf den Arbeitsbereich (23) der Ringwalzmaschine (4) gerichtet ist, wobei der Lichtschnittsensor an einem Axialgerüst der Ringwalzmaschine (4) angeordnet ist und somit gemeinsam mit diesem radial verlagerbar ist, und eine Eingangsgröße für eine Umformsteuerungseinrichtung (27) darstellt, welche während des Umformens das wenigstens eine Umformwerkzeug (25) in Bezug auf das Werkstück anstellt, und dass der Lichtschnittsensor (13) auf einen Umformbereich (24), in welchem das Umformwerkzeug (25) umformend wirksam ist, gerichtet ist.

2. Ringwalzmaschine (4) nach Anspruch 1, **dadurch gekennzeichnet, dass** die Ringwalzmaschine (4) wenigstens zwei gleichzeitig und gegengerichtet auf das Werkstück wirkende Umformwerkzeuge (25) aufweist und der Lichtschnittsensor (13) auf einen Bereich, der zwischen diesen beiden Umformwerkzeugen (25) liegt, und/oder auf wenigstens eine auf das Werkstück gerichtete Umformfläche (26) eines der beiden Umformwerkzeuge (25), vorzugsweise auf wenigstens eine auf das Werkstück gerichtete Umformfläche (26) beider Umformwerkzeuge (25), gerichtet ist.

3. Ringwalzmaschine (4) nach Anspruch 1 oder 2, **dadurch gekennzeichnet, dass** die Ringwalzmaschine (4) wenigstens zwei Lichtschnittsensoren (13) umfasst, die auf den Arbeitsbereich (23) der Ringwalzmaschine (4) gerichtet sind.

4. Verfahren zur Steuerung einer Ringwalzmaschine (4), **dadurch gekennzeichnet, dass** das Profil eines in der Ringwalzmaschine (4) umgeformten Werkstücks während des Umformens mittels eines an einem Axialgerüst angeordnetem Lichtschnittsensors (13) überwacht wird und der Lichtschnittsensor (13) gemeinsam mit dem Axialgerüst radial verlagert wird, wobei der Lichtschnittsensor auf einen Umformbereich, in welchem das Umformwerkzeug umformend wirksam ist, gerichtet wird.

5. Steuerungsverfahren nach Anspruch 4, **dadurch gekennzeichnet, dass** das Profil während des Umformens gemessen und mit einem Sollprofil verglichen wird, wobei der Vergleich vorzugsweise ebenfalls während des Umformens durchgeführt wird, und dass aus dem Vergleichsergebnis vorzugsweise steuernde Eingriffe, insbesondere regelnde Eingriffe in den Umformvorgang der Ringwalzmaschine (4) generiert werden.

6. Steuerungsverfahren nach Anspruch 4 oder 5, **dadurch gekennzeichnet, dass** das Profil des in der Ringwalzmaschine (4) umgeformten Werkstücks mittels wenigstens zweier Lichtschnittsensoren (13) überwacht wird.

7. Ringwalzmaschine (4) nach Anspruch 3 bzw. Steuerungsverfahren nach Anspruch 6, **dadurch gekennzeichnet, dass** die beiden Lichtschnittsensoren (13) überkreuzend oder sonstwie linear unabhängig ausgerichtet sind.

8. Ringwalzmaschine (4) nach Anspruch 3 bzw. Steuerungsverfahren nach Anspruch 7, **dadurch gekennzeichnet, dass** die beiden Lichtschnittsensoren (13) sowohl radial als auch axial auf das Werkstück ausgerichtet sind.

9. Ringwalzmaschine (4) nach Anspruch 3 bzw. Steuerungsverfahren nach Anspruch 6, **dadurch gekennzeichnet, dass** die beiden Lichtschnittsensoren (13) kollinear, vorzugsweise ohne einen Abstand und nur mit einem geringen Überlapp, ausgerichtet sind.

10. Ringwalzmaschine (4) bzw. Steuerungsverfahren nach einem der vorstehenden Ansprüche, **dadurch gekennzeichnet, dass** die Ringwalzmaschine (4) zumindest ein Paar Axialwalzen (11, 12) als Umformwerkzeuge (25) aufweist und der Lichtschnittsensor (13) von einer ersten Walze eines Walzenpaars zu einer zweiten Walze des Walzenpaars misst.

11. Ringwalzmaschine (4) bzw. Steuerungsverfahren nach einem der vorstehenden Ansprüche, **dadurch gekennzeichnet, dass** der Lichtschnittsensor (13) an einer von einem Radialwalzgerüst (15), abgewandten Stelle angeordnet und auf den Arbeitsbereich (23) gerichtet ist.

## Claims

1. A ring rolling machine (4), comprising at least one forming tool (25), which can have a forming effect on a workpiece arranged in a working region (23) of the ring rolling machine (4), **characterised in that** the ring rolling machine (4) comprises a light section sensor (13), which is directed towards the working region (23) of the ring rolling machine (4), the light section sensor being arranged on an axial frame of the ring rolling machine (4) and thus being radially displaceable together with said axial frame, and represents an input variable for a forming control device (27) which positions the at least one forming tool (25) relative to the workpiece during forming, and the light section sensor (13) is directed towards a forming region (24) in which the forming tool (25) has a forming effect.

2. The ring rolling machine (4) according to Claim 1, **characterised in that** the ring rolling machine (4) has at least two forming tools (25) which act simultaneously and in opposite directions on the workpiece, and the light section sensor (13) is directed towards a region which lies between these two forming tools (25) and/or towards at least one forming face (26), directed towards the workpiece, of one of the two forming tools (25), preferably towards at least one forming face (26), directed towards the workpiece, of both forming tools (25) .

3. The ring rolling machine (4) according to Claim 1 or 2, **characterised in that** the ring rolling machine (4) comprises at least two light section sensors (13) which are directed towards the working region (23) of the ring rolling machine (4).

4. A method for controlling a ring rolling machine (4), **characterised in that** the profile of a workpiece formed in the ring rolling machine (4) is monitored during forming by means of a light section sensor (13) arranged on an axial frame, and the light section sensor (13) is displaced radially together with the axial frame, wherein the light section sensor is directed towards a forming region in which the forming tool has a forming effect.

5. The control method according to Claim 4, **characterised in that** the profile is measured during forming and compared with a target profile, wherein the comparison is preferably also carried out during forming, and controlling interventions, in particular regulating interventions, in the forming process of the ring rolling machine (4) are preferably generated from the comparison result.

6. The control method according to Claim 4 or 5, **characterised in that** the profile of the workpiece formed in the ring rolling machine (4) is monitored by means of at least two light section sensors (13).

7. The ring rolling machine (4) according to Claim 3 or the control method according to Claim 6, **characterised in that** the two light section sensors (13) are oriented in an intersecting or otherwise linearly independent manner.

8. The ring rolling machine (4) according to Claim 3 or the control method according to Claim 7, **characterised in that** the two light section sensors (13) are oriented towards the workpiece both radially and axially.

9. The ring rolling machine (4) according to Claim 3 or the control method according to Claim 6, **characterised in that** the two light section sensors (13) are oriented colinearly, preferably without a spacing and only with a small overlap.

10. The ring rolling machine (4) or the control method according to any one of the preceding claims, **characterised in that** the ring rolling machine (4) has at least one pair of axial rollers (11, 12) as forming tools (25), and the light section sensor (13) measures from a first roller of a roller pair to a second roller of the roller pair.

11. The ring rolling machine (4) or the control method according to any one of the preceding claims, **characterised in that** the light section sensor (13) is arranged at a location facing away from the radial rolling frame (15) and is directed towards the working region (23).

## Revendications

1. Machine à laminer les bagues (4), comprenant au moins un outil de façonnage (25), lequel est susceptible d'agir en façonnage sur une pièce à usiner placée dans la zone de travail (23) de la machine à laminer les bagues (4), **caractérisée en ce que** la machine à laminer les bagues (4) comprend un capteur de profil (13), qui est dirigé sur la zone de travail (23) de la machine à laminer les bagues (4), le capteur de profil étant placé sur une cage axiale de la machine à laminer les bagues (4) et étant ainsi déplaçable conjointement avec celle-ci en direction axiale, et représentant une grandeur d'entrée pour un système de commande du façonnage (27) laquelle, pendant le façonnage met en prise l'au moins un outil de façonnage (25) en rapport à la pièce à usiner, et **en ce que** le capteur de profil (13) est dirigé sur une zone de façonnage (24), dans laquelle l'outil de façonnage (25) agit en façonnage.

2. Machine à laminer les bagues (4) selon la revendication 1, **caractérisée en ce que** la machine à laminer les bagues (4) comporte au moins deux outils de façonnage (25) agissant simultanément et à contresens sur la pièce à usiner et **en ce que** le capteur de profil (13) est dirigé sur une zone qui se situe entre lesdits deux outils de façonnage (25) et/ou sur l'au moins une surface de façonnage (26) dirigée vers la pièce à usiner de l'un des deux outils de façonnage (25), de préférence sur au moins une surface de façonnage (26) dirigée vers la pièce à usiner des deux outils de façonnage (25).

3. Machine à laminer les bagues (4) selon la revendication 1 ou 2, **caractérisée en ce que** la machine à laminer les bagues (4) comprend au moins deux capteurs de profil (13) qui sont dirigés sur la zone de travail (23) de la machine à laminer les bagues (4).

4. Procédé, destiné à commander une machine à laminer les bagues (4), **caractérisé en ce que** pendant le façonnage, le profil d'une pièce à usiner façonnée dans la machine à laminer les bagues (4) est supervisé au moyen d'un capteur de profil (13) placé sur une armature axiale et **en ce qu'**on déplace le capteur de profil (13) en direction radiale, conjointement avec l'armature axiale, le capteur de profil étant dirigé vers une zone de façonnage dans laquelle l'outil de façonnage agit en façonnage.

5. Procédé de commande selon la revendication 4, **caractérisé en ce que** pendant le façonnage, on mesure le profil et on le compare avec un profil théorique, la comparaison étant réalisée de préférence également pendant le façonnage et **en ce qu'**à partir du résultat de la comparaison, de préférence des interventions de commande, notamment des interventions de réglage sont générées dans le processus de façonnage de la machine à laminer les bagues (4).

6. Procédé de commande selon la revendication 4 ou 5, **caractérisé en ce que** le profil de la pièce à usiner façonnée dans la machine à laminer les bagues (4) est supervisé au moyen d'au moins deux capteurs de profil (13) .

7. Machine à laminer les bagues (4) selon la revendication 3 ou procédé de commande selon la revendication 6, caractérisé(e) en ce que les deux capteurs de profils (13) sont orientés de manière à se croiser ou de toute autre manière linéairement indépendante.

8. Machine à laminer les bagues (4) selon la revendication 3 ou procédé de commande selon la revendication 7, caractérisé (e) en ce que les deux capteurs de profils (13) sont orientés sur la pièce à usiner, aussi bien en direction radiale qu'également en direction axiale.

9. Machine à laminer les bagues (4) selon la revendication 3 ou procédé de commande selon la revendication 6, caractérisé(e) en ce que les deux capteurs de profil (13) sont orientés de manière colinéaire, de préférence sans le moindre écart et avec seulement un faible chevauchement.

10. Machine à laminer les bagues (4) ou procédé de commande selon l'une quelconque des revendications précédentes, caractérisé(e) en ce que la machine à laminer les bagues (4) comporte au moins une paire de rouleaux axiaux (11, 12) en tant qu'outils de façonnage (25) et en ce que le capteur de profil (13) mesure d'un premier rouleau de la paire de rouleaux vers un deuxième rouleau de la paire de rouleaux.

11. Machine à laminer les bagues (4) ou procédé de commande selon l'une quelconque des revendications précédentes, caractérisé(e) en ce que le capteur de profil (13) est placé en un endroit qui est détourné d'une cage de laminoir (15), radiale et est dirigé vers la zone de travail (23).
